# EUROPEAN PATENT APPLICATION

(11) **EP 4 753 351 A1**
(43) Date of publication of application: **03.06.2026**
(21) Application number: 23946667.5
(22) Date of filing: 25.07.2023
(51) Int. Cl.: H04W 72/232, H04W 8/22

(54) **TERMINAL, BASE STATION, AND COMMUNICATION METHOD**

(71) Applicant: NTT DOCOMO, INC., Tokyo 100-6150 (JP)
(72) Inventor: OKANO, Mayuko, Tokyo 100-6150 (JP); YOSHIOKA, Shohei, Tokyo 100-6150 (JP); TAKAHASHI, Yuki, Tokyo 100-6150 (JP); NAKAMURA, Takuma, Tokyo 100-6150 (JP)
(74) Representative: Hoffmann Eitle
(86) International application number: PCT/JP2023/027270
(87) International publication number: WO 2025/022584

(57) **Abstract**

A terminal including: a receiving unit configured to receive configuration information from a base station, the configuration information relating to reception of downlink control information and including configurations that vary depending on at least one of a terminal type, a terminal identifier, or a terminal capability; and a control unit configured to set, based on the configuration information, configurations that relate to the reception of the downlink control information and that correspond to the terminal, and, in this terminal, the receiving unit is configured to receive the downlink control information from the base station.

## Description

### TECHNICAL FIELD

The present invention relates to a terminal, a base station, and a communication method in a wireless communication system.

### BACKGROUND ART

The requirements of "new radio" (NR, also referred to as "5G"), which is a successor system of long-term evolution (LTE), include large system capacity, high data transmission speed, low latency, simultaneous access from multiple terminals, low cost, power saving, and so forth, and a variety of techniques are under study to meet these requirements (see, for example, Non-Patent Literature 1).

In LTE or NR, UE categories or UE capabilities for Internet-of-things (IoT) technology, in which terminals may not have some of the functions that normal terminals have on a mandatory basis, such as functions that relate to transmitting/receiving bands, the number of antennas, etc., are defined. For example, "enhanced machine-type communication (eMTC)" and "narrow-band IoT (NB-IoT)" are defined in LTE, and "reduced capability (RedCap)" and the like are defined in NR.

In addition, studies have begun on systems beyond 5G, such as 6G. In such future systems, diversified terminals such as ones that support ambient IoT technology (e.g., wireless tags) and ones that support extended virtual reality (XR) technology with enhanced virtual reality functions are expected to meet a diverse range of requirements regarding, for example, power consumption, latency, communication speed, and so forth.

### CITATION LIST

### NON-PATENT LITERATURE

Non-Patent Literature 1: 3GPP TS 38.300 V17.3.0 (2022-12)
Non-Patent Literature 2: 3GPP TS 38.213 V17.4.0 (2022-12)
Non-Patent Literature 3: 3GPP TS 38.214 V17.4.0 (2022-12)
Non-Patent Literature 4: 3GPP TS 38.331 V17.3.0 (2022-12)
Non-Patent Literature 5: 3GPP TS 38.321 V17.3.0 (2022-12)
Non-Patent Literature 6: 3GPP TS 36.306 V17.4.0 (2023-03)
Non-Patent Literature 7: 3GPP TS 38.306 V17.5.0 (2023-06)

### SUMMARY OF INVENTION

### TECHNICAL PROBLEM

Because reducing the load on terminals receiving downlink control information is important to achieving low terminal power consumption, NR Release 17 supports functions to reduce monitoring and reception of downlink control information.

However, future systems (for example, NR Release 18 and NR's successor systems such as 6G) anticipate further diversification of terminals, and so optimization of downlink control information monitoring and reception will be necessary.

The present invention has been made in view of the foregoing and aims to provide configurations that relate to monitoring and reception of downlink control information and that are suitable for every terminal in a wireless communication system.

### SOLUTION TO PROBLEM

According to the technique disclosed herein, a terminal is provided. This terminal includes: a receiving unit configured to receive configuration information from a base station, the configuration information relating to reception of downlink control information and including configurations that vary depending on at least one of a terminal type, a terminal identifier, or a terminal capability; and a control unit configured to set, based on the configuration information, configurations that relate to the reception of the downlink control information and that correspond to the terminal, and, in this terminal, the receiving unit is configured to receive the downlink control information from the base station.

### ADVANTAGEOUS EFFECTS OF INVENTION

According to the technique disclosed herein, it is possible to provide configurations that relate to monitoring and reception of downlink control information in ways that are suitable for every terminal in a wireless communication system.

### BRIEF DESCRIPTION OF DRAWINGS

[FIG. 1] FIG. 1 is a diagram showing a sample architecture of a wireless communication system;
[FIG. 2] FIG. 2 is a diagram showing a first example of a function that relates to reception of downlink control information;
[FIG. 3] FIG. 3 is a diagram showing a second example of a function that relates to reception of downlink control information;
[FIG. 4] FIG. 4 is a sequence diagram for explaining a first example of transmission/reception according to an embodiment of the present invention;
[FIG. 5] FIG. 5 is a sequence diagram for explaining a second example of transmission/reception according to the embodiment of the present invention;
[FIG. 6] FIG. 6 is a diagram showing a sample functional structure of a base station 10 according to the embodiment of the present invention;
[FIG. 7] FIG. 7 is a diagram showing a sample functional structure of a terminal 20 according to the embodiment of the present invention;
[FIG. 8] FIG. 8 is a diagram showing a sample hardware structure of the base station 10 or the terminal 20 according to the embodiment of the present invention; and
[FIG. 9] FIG. 9 is a diagram showing a sample structure of a vehicle 2001 according to the embodiment of the present invention.

### DESCRIPTION OF EMBODIMENTS

An embodiment of the present invention will be described below with reference to the accompanying drawings. Note that the embodiment described below is only an example, and the applicability of the present invention is by no means limited to the following embodiment.

Existing techniques may be used as appropriate to operate the wireless communication system according to the following embodiment of the present invention. Examples of such techniques may include, but are not limited to, existing LTE. Also, unless otherwise specified, the term "LTE" as used herein has a broad meaning, covering LTE-Advanced and systems that emerged after LTE-Advanced (for example, NR).

Also, in the following description of an embodiment of the present invention, terms that are used in existing LTE will be used, including "synchronization signal (SS)", "primary SS (PSS)", "secondary SS (SSS)", "physical broadcast channel (PBCH)", "physical random access channel (PRACH)", "physical downlink control channel (PDCCH)", "physical downlink shared channel (PDSCH)", "physical uplink control channel (PUCCH)", "physical uplink shared channel (PUSCH)", and so forth. The use of these terms is for ease of description, and signals, functions, and so forth that are the same or substantially the same as these may be referred to by other names. For example, in NR, the above terms correspond to "NR-SS", "NR-PSS", "NR-SSS", "NR-PBCH", "NR-PRACH", and so forth. The signals used in NR might not be always written with the prefix "NR-".

Also, in the following embodiment of the present invention, the duplex method may be time division duplexing (TDD), frequency division duplexing (FDD), or any other method (including flexible duplexing, for example).

Also, in the following embodiment of the present invention, when a radio parameter or the like is "set" or "configured", this may mean that, for example, a predetermined value is set or configured in advance (or "pre-configured"), or that a radio parameter or the like that is indicated from a base station 10 or a terminal 20 is configured.

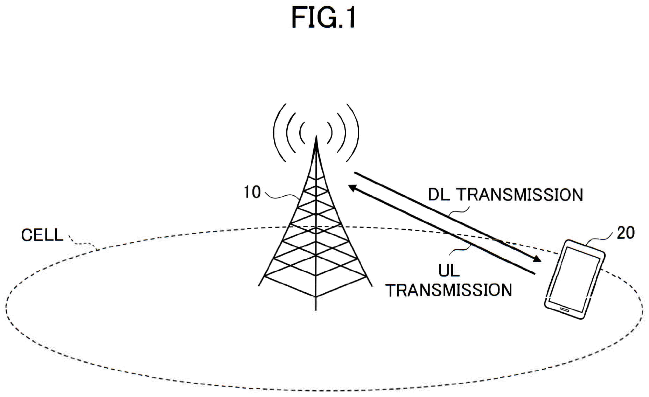

FIG. 1 is a diagram showing an example structure (1) of a wireless communication system according to an embodiment of the present invention. As shown in FIG. 1, according to an embodiment of the present invention, a wireless communication system may include a base station 10 and a terminal 20. Although one base station 10 and one terminal 20 are shown in FIG. 1, this is just one example, and there may be two or more of each.

The base station 10 may be a communication device that provides one or more cells and communicates with the terminal 20 via wireless means. Physical resources for radio signals may be given in the time domain and the frequency domain. The time domain resources may be indicated by the number of orthogonal frequency division multiplexing (OFDM) symbols, and the frequency domain resources may be indicated by the number of subcarriers or resource blocks. The base station 10 may transmit synchronization signals and system information to the terminal 20. The synchronization signals may include, for example, NR-PSS and NR-SSS. The system information may be transmitted, for example, on NR-PBCH, and may be also referred to as "broadcast information". The synchronization signals and system information may be referred to as "SS/PBCH block" (SSB). Referring to FIG. 1, the base station 10 may transmit control signals or data to the terminal 20 via downlink (DL), and receive control signals or data from the terminal 20 via uplink (UL). Both the base station 10 and the terminal 20 can transmit and receive signals by using beamforming. Also, both the base station 10 and the terminal 20 can apply multiple-input multiple-output (MIMO) communication to DL or UL. Also, the base station 10 and the terminal 20 may both communicate via a secondary cell (SCell) and a primary cell (PCell) in carrier aggregation (CA). Furthermore, in the event dual connectivity (DC) is deployed, the terminal 20 may communicate via a primary cell of the base station 10 and a primary secondary cell group cell (PSCell: Primary SCG Cell) of another base station 10.

The terminal 20 may be a communication device with a wireless communication function, such as a smartphone, a mobile phone, a tablet, a wearable terminal, or a machine-to-machine (M2M) communication module. As shown in FIG. 1, the terminal 20 may receive control signals or data from the base station 10 via DL, and transmit control signals or data to the base station 10 via UL, thereby using various communication services provided by the wireless communication system. Also, the terminal 20 may receive various reference signals sent from the base station 10 and measure the quality of propagation paths based on the result of receiving these reference signals.

The terminal 20 may communicate with the base station 10 in carrier aggregation, in which multiple cells (multiple component carriers (CCs)) are bundled. In carrier aggregation, one primary cell (PCell) and one or more secondary cells (SCells) may be used. PUCCH-SCell with PUCCH may also be used.

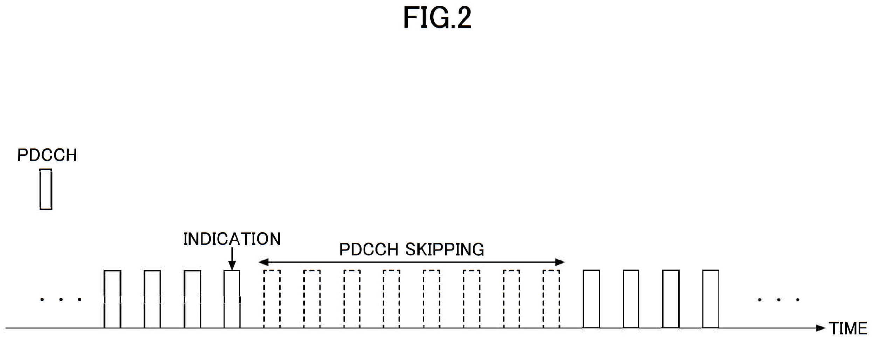

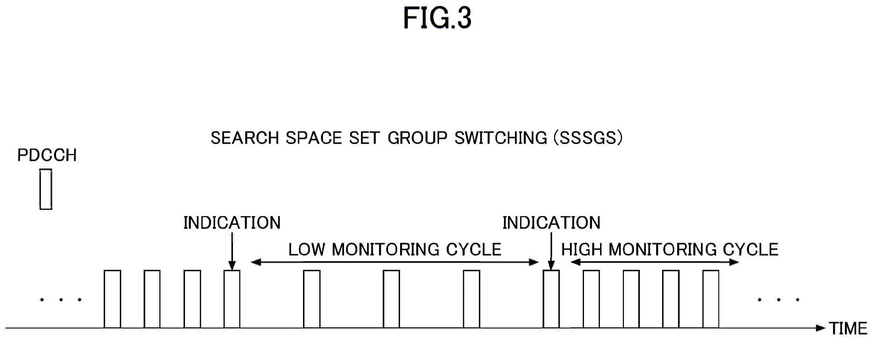

A function to allow for reduced monitoring of downlink control information, which is supported in NR Release 17, will be described below with reference to FIG. 2 and FIG. 3. To perform "monitoring" and "to monitor" may be used interchangeably hereinafter.

FIG. 2 is a diagram showing a first example of a function that relates to reception of downlink control information. According to the function (PDCCH skipping) shown in FIG. 2, a PDCCH carrying an indication for starting "skipping" is transmitted when, for example, the terminal 20 need not receive downlink control information. After receiving the PDCCH with the indication, the terminal 20 skips monitoring and receiving of the PDCCH for a certain period of time. This allows the terminal 20 to reduce its power consumption.

FIG. 3 shows a second example of a function that relates to reception of downlink control information. According to the function (search space set group switching (SSSGS)) shown in FIG. 3, after receiving a PDCCH carrying an indication, the terminal 20 monitors and receives the PDCCH based on a monitoring cycle (lower or higher monitoring cycle) according to configurations set in accordance therewith. For example, the monitoring cycle may be made lower, so that the terminal 20 can reduce its power consumption.

However, according to existing specifications, the functions shown in FIG. 2 and FIG. 3 are applicable only to a UE-specific search space (USS) and type-3 common search space (CSS), but not to cell-common downlink information such as type-0/0A/1/2 CSSs.

### (First Embodiment)

A first embodiment will be described. According to the first embodiment, the terminal 20 receives downlink control information based on its configurations related to reception of downlink control information, which are set based on the terminal type (UE type), terminal identifier (UE-ID), terminal capabilities (UE capabilities), and so forth of the terminal 20. In other words, reception of downlink control information may be configured differently per terminal 20 or per group (or "sub-group") of terminals 20.

This allows the terminal 20 to spare unnecessary monitoring and reception of downlink control information depending on its type, capabilities, and so forth, thereby reducing the power consumption of the terminal 20.

Note that configurations relating to reception of downlink control information used herein may be cell-common configurations that are provided in existing specifications with respect to downlink control information reception, or may be non-cell-common configurations for downlink control information reception (for example, ones that are set on a per terminal basis). Furthermore, configurations for downlink control information reception used herein may be configurations that relate to monitoring and/or reception of downlink control information. "Configurations" may be referred to as "configuration information" as well. To perform "monitoring" and "to monitor" may be used interchangeably. The same applies hereinafter.

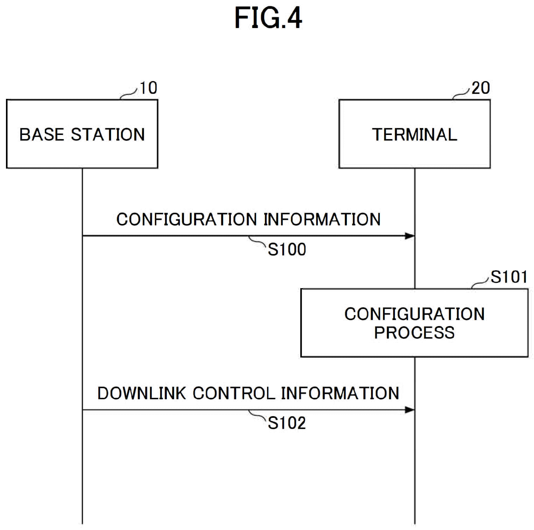

FIG. 4 is a sequence diagram for explaining a first example of transmission/reception according to the embodiment of the present invention. The process of steps in FIG. 4 will be described below.

Step S100: The terminal 20 receives configuration information from the base station 10, including configurations for reception of downlink control information. These configurations for downlink control information reception include first configuration information that applies in common to all terminals 20 in the cell, and second configuration information that varies per terminal 20 or per group of terminals 20 in the cell. The first configuration information and second configuration information are transmitted using, for example, an RRC protocol. The first configuration information and second configuration information may be transmitted simultaneously or separately.

Furthermore, where first configuration information is provided, second configuration information may be set additionally, for example, per terminal 20 or per group of terminals 20. For example, a value representing the difference between a value that is set according to first configuration information and a value that is set for a specific terminal 20 or a specific group of terminals 20 may be included in second configuration information as an offset.

For example, where occasions to receive downlink control information are set by first configuration information, information about occasions in which the receiving operation is not performed, their timings, durations, and so forth may be included in second configuration information.

For example, if occasions to receive downlink control information are set by the first configuration information, information about occasions in which the receiving operation is additionally performed, their timings, durations, and so forth may be included in the second configuration information.

Step S101: Based on the configuration information received in step S100, the terminal 20 executes a process of setting the configurations for downlink control information reception for the terminal 20.

Step S102: In accordance with the setting process executed in step S101, the terminal 20 monitors and receives downlink control information sent from the base station 10.

Here, the downlink control information may include indication information that commands activation, deactivation, or change of the configurations for downlink control information reception. The terminal 20 may activate, deactivate, or change the configurations for downlink control information reception based on this indication information.

Next, the downlink control information, configuration information, setting method, and so forth according to the first embodiment will be described in detail.

### (1-1) Types of Downlink Control Information

The downlink control information according to the first embodiment may be as follows:

The downlink control information may be system information. The system information may include, for example, a master information block (MIB), system information (SI), a system information block (SIB), other system information (OSI), etc.

The downlink control information may be downlink control information (DCI) scrambled with a system information radio network temporary identifier (SI-RNTI) or a PDSCH scheduled by that DCI. This PDSCH may include downlink control information such as a radio resource control (RRC) protocol, a medium access control control element (MAC CE), etc.

The downlink control information may be a PDCCH transmitted in type-0/0A common search spaces (CSSs).

The downlink control information may be information that relates to random access resource allocation.

The downlink control information may be DCI scrambled with a particular RNTI (such as a random access radio network temporary identifier (RA-RNTI), a temporary cell radio network temporary identifier (TC-RNTI), an MsgB-RNTI, etc.), or a PDSCH scheduled by that DCI. This PDSCH may include downlink control information such as an RRC protocol, a MAC CE, etc.

The downlink control information may be a PDCCH transmitted in type-1 CSS.

The downlink control information may be information related to paging, DCI scrambled with a paging radio network temporary identifier (P-RNTI), a PDSCH scheduled by that DCI, or a PDCCH transmitted in type-2 CSS.

When there is downlink control information that relates to paging, it may not be necessary to receive the paging information, depending on the use case or terminal type. For example, IoT terminals such as sensors need not receive paging information such as public warning system (PWS) or earthquake and tsunami warning system (ETWS) information, and may reduce their power consumption by skipping downlink control information monitoring and reception or by not supporting downlink control information monitoring and reception. In this specification, "to skip", "to drop", and "to cancel" may be used interchangeably.

### (1-2) Types of Terminals

According to the first embodiment, the following types of terminals 20 may be used.

A terminal 20 may be a variety of types, including: a hand-held terminal used by holding its casing in the user's hand; a smartphone; a mobile phone; an extended reality (XR) terminal compatible with technologies such as virtual reality (VR), augmented reality (AR), and mixed reality (MR); an IoT terminal; a reduced capability (RedCap) terminal; a low category terminal; and an ambient IoT terminal such as a wireless tag (for example, a radio frequency identification (RFID) tag). A "low category terminal" is, for example, a terminal having a low terminal-category (UE category) value according to Non-Patent Literature 6.

Terminals 20 may be classified into a type that supports a particular terminal capability (UE capability) or a type that does not support the terminal capability.

This particular terminal capability may be at least one of: a terminal capability for monitoring a particular DCI format; a terminal capability for monitoring a PDCCH in a search space of a particular type; a terminal capability for monitoring DCI scrambled with a particular RNTI; and a particular power class.

The particular terminal capability may also be one for supporting at least one of: a particular band; a particular subcarrier spacing (SCS); a particular frequency range (FR); a particular carrier type; a particular radio frequency (RF); and a particular baseband. The carrier type may be, for example, "licensed", "unlicensed", "time division duplex (TDD)", "frequency division duplex (FDD)", etc.

The particular terminal capability may also be one for supporting carrier aggregation or dual connectivity.

The particular terminal capability may also be the mobility of the terminal 20. For example, the terminal 20 may be a mobile terminal or a fixed terminal stationed at a fixed location.

### (1-3) Groups of Terminals

According to the first embodiment, terminals 20 may be classified into groups based on the following units. A group may also be referred to as a "sub-group".

A terminal 20 may be placed in a group based on, for example: the terminal type (UE type); the terminal capabilities (UE capabilities); the identifier of the terminal 20 (UE ID); the received intensity (received power) of a particular signal or channel as received by the terminal 20; position information of the terminal 20; sensing information of the terminal 20; and the type of the network (NW type) . Here, the position information of the terminal 20 may be obtained, for example, using an estimation result calculated by a positioning function. Furthermore, the network type may be, for example, a terrestrial network (TN) or a non-terrestrial network (NTN).

After an RRC connection is built, configurations relating to reception of downlink control information may be selected and indicated per terminal 20 or per group of terminals 20, by using terminal-specific RRCs (or UE-specific config), MAC-CEs, and physical layer signaling (or "PHY signaling", such as PDCCH, PDSCH, DCI, UCI, etc.).

When a terminal 20 switches from "CONNECTED" mode to "IDLE" mode or to "INACTIVE" mode, the terminal 20 may still use downlink control information that it has received while in "CONNECTED" mode.

If no configuration relating to downlink control information reception is indicated, the terminal 20 may use default configurations provided in the specification.

For example, the terminal 20 may have an algorithm and the like provided therefor based on its terminal ID (UE ID) or the like, and interpret, implicitly, the configurations for downlink control information reception from the algorithm and the like. The terminal 20 may solve, for example, an algorithm that includes its terminal identifier (UE ID), and use the configurations for downlink control information reception that are determined from the resulting value.

### (1-4) Configurations for Reception of Downlink Control Information

The configurations for reception of downlink control information may include whether or not downlink control information needs to be received.

The configurations for reception of downlink control information may include configurations of resources for use in monitoring and/or reception of downlink control information, a downlink control channel (PDCCH), and a search space (SS).

The resources may be set concerning time resources related to periods and/or control resource sets (CORESETs) that are determined by frames, slots, symbol durations, offsets, and so forth.

Alternatively, the resources may be CORESETs, resource elements (REs), resource blocks (RBs), resource block groups (RBGs), and interleaving, which are determined by bandwidth (BW), offsets, and so forth.

The configurations for reception of downlink control information may include the received intensity (received power) at the terminal 20. For example, if the received power at the terminal 20 is greater than or equal to a set value, the terminal 20 may set out configurations for receiving downlink control information.

The configurations for reception of downlink control information may include a configuration related to RNTI. For example, a configuration as to whether or not to receive downlink control information associated with a particular RNTI may be applied to a specific terminal 20 or a specific group of terminals 20.

The configurations for reception of downlink control information may include the number of control channel elements (CCEs) and/or the aggregation level (AL). For example, different numbers of CCEs and/or different ALs may be set per terminal 20 or per group of terminals 20.

The configurations for reception of downlink control information may include ones used before the terminal 20 makes initial access to a network such as the terminal type (UE type), the terminal capabilities (UE capabilities), the terminal identifier (UE ID), the received intensity, and the network type (NW type).

When making initial access, or when entering "CONNECTED" mode once, and then entering "IDLE" or "INACTIVE" mode later, the UE may use, in addition to the configurations used before the initial access was built, configurations indicated by terminal-specific (UE-specific config) RRCs, MAC-CEs, and physical layer signaling (PHY signaling such as PDCCH, PDSCH, DCI, UCI, etc.). Furthermore, when entering "IDLE" or "INACTIVE" mode, the terminal 20 may use configurations indicated thereto while in "CONNECTED" mode.

If the terminal 20 receives an indication of a configuration relating to reception of downlink control information, it may use the indicated configuration. Alternatively, if the terminal 20 does not receive an indication of a configuration relating to downlink control information, it may use, for example, configurations that are defined in advance (default configurations).

Alternatively, the configurations for reception of downlink control information may be associated with other indications and set thereby implicitly.

Alternatively, the configurations for reception of downlink control information may be set differently based on position information of the terminal 20.

### (1-5) Configurations according to Type of Downlink Control Information

The configurations for reception of downlink control information may vary depending on the type of downlink control information. The types of downlink control information described in (1-1) may be applicable here.

In the event where downlink control information that relates to paging is provided, varying RNTIs that correspond to, for example, an RRC setup trigger, an update of system information, a PWS and/or ETWS notice, and so forth may be used. By this means, whether or not to receive these varying RNTIs can be set per terminal 20 or per group of terminals 20, so that whether or not to receive corresponding downlink control information can also be set per terminal 20 or per group of terminals 20. Alternatively, whether or not to support reception of these varying RNTIs may be set based on terminal capabilities.

In the event where downlink control information that relates to paging is provided, varying search space (SS) types that correspond to, for example, an RRC setup trigger, an update of system information, a PWS and/or ETWS notice, and so forth may be used. By this means, whether or not to receive these varying RNTIs can be set per terminal 20 or per group of terminals 20, so that whether or not to receive corresponding downlink control information can be set per terminal 20 or per group of terminals 20. Alternatively, whether or not to support reception of these varying RNTIs may be set based on terminal capabilities.

By this means, configurations that relate to reception of downlink control information can be set in a more customized manner than provided in existing specifications, thereby further optimizing the power saving of the terminal 20 with respect to reception of downlink control information.

### (1-6) Activating/Deactivating Reception of Particular Downlink Control Information

The base station 10 may send an indication to the terminal 20 to activate or deactivate monitoring and reception of particular downlink control information (for example, a particular DCI format, DCI scrambled with a particular RNTI, etc.) and/or a specific search space type (SS type). This indication may be included in RRC configuration information or in downlink control information such as DCI and/or MAC CE.

Here, for example, indications to activate and deactivate a particular configuration may be sent, or a duration (time) to activate a particular configuration may be indicated.

Alternatively, for example, timings to activate and deactivate a particular configuration may be indicated.

These timings may be indicated, for example, as the time (the millisecond being the unit, for example), the number of symbols, or the number of slots from the start or the end of a period in which DCI indicating activation or deactivation of a particular configuration is received.

The timings may also be indicated, for example, as the time (the millisecond being the unit, for example), the number of symbols, or the number of slots from the start or the end of a HARQ-ACK, which is sent in response when a MAC CE is received, the MAC CE being control information that indicates activation and deactivation of a particular configuration.

### (1-7) Configurations related to Resources for Receiving Particular Downlink Control Information

The base station 10 may send, to the terminal 20, resource configurations that relate to monitoring and reception of DCI scrambled with particular downlink control information (for example, a particular DCI format, a particular RNTI, etc.) and/or a particular search space type (SS type).

### (1-8) Determining Configurations for Reception of Downlink Control Information by Terminal

The terminal 20 determines and/or changes configurations that relate to reception of downlink control information.

The terminal 20 may determine and/or change its configurations that relate to reception of downlink control information based on, for example, commands from higher layers within the terminal 20. For example, the terminal 20 may change its configurations relating to reception of downlink control information in response to a command from a higher layer in the terminal 20 regarding the status of power consumption in the terminal 20.

The terminal 20 may also determine and/or change its configurations relating to downlink control information reception based on received intensity (received power). For example, the terminal 20 may change its configurations such that downlink control information is received if the received power at the terminal 20 is greater than or equal to a predetermined value.

In the event that a PDCCH is to be monitored in particular DCI or a particular search space (SS), the above reception-related configurations may include a configuration that specifies the type of DCI format and/or RNTI with which the DCI or search space subject to monitoring is scrambled.

Alternatively, the reception-related configurations may include a configuration regarding the periodicity of search spaces (SS).

The reception-related configuration may also include a configuration that relates to skipping of reception of downlink control information (e.g., PDCCH) and/or a configuration concerning which search space set group (SSSG) is to be monitored.

The base station 10 may indicate multiple sets of configurations to the terminal 20, and the terminal 20 may select a set of configurations to determine and/or change from the indicated sets of configurations.

Furthermore, the terminal 20 may transmit, to the base station 10, a notice about the selected set of configurations for reception of downlink control information.

Furthermore, the terminal 20 may send this notice to the base station 10 by including it in a terminal capability signal (UE capability signaling).

Furthermore, the terminal 20 may send this notice to the base station 10 by including it in a message (for example, Msg1, Msg3, MsgA, etc.) in random access procedures.

The terminal 20 may also include the notice in uplink control information (UCI) and/or higher layer information (RRC, etc.) and send it to the base station 10.

Unless the terminal 20 sends a notice to the base station 10 about the specifics of decisions and changes it makes, the base station 10 is unable to determine when the terminal 20 is receiving downlink control information or whether the terminal 20 is receiving downlink control information properly. Existing specifications provide for no uplink transmission that matches in effect PDSCH scheduled by SI-RNTI and P-RNTI.

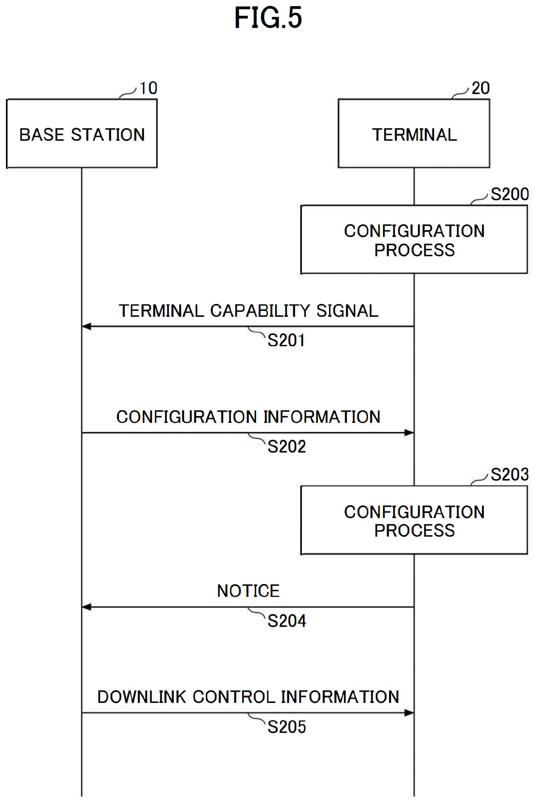

FIG. 5 is a sequence diagram for explaining a second example of transmission/reception according to the embodiment of the present invention. The process in each step in FIG. 5 will be explained below.

Step S200: The terminal 20 determines or changes a configuration that relates to reception of downlink control information based on, for example, a higher layer command within the terminal 20, and performs a process to set out the determined or changed configuration.

Step S201: The terminal 20 transmits a terminal capability signal to the base station 10, including a notice about the configuration set in step S200.

Step S202: The terminal 20 receives configuration information from the base station 10, including multiple sets of configurations relating to reception of downlink control information.

Step S203: The terminal 20 selects a set of configurations from the multiple sets of configurations relating to downlink control information reception, included in the configuration information received in step S202, and performs a process of setting the selected set of configurations.

Step S204: The terminal 20 sends, to the base station 10, a notice about the configurations set in step S203.

Step S205: The terminal 20 monitors and receives the downlink control information sent from the base station 10 based on the setting processes performed in steps S202 and S204.

Note that, in the sequence diagram of FIG. 5, one or both of the configuration setting process and the notice sending process of steps S200 and S201 may be performed; likewise, one or both of the configuration setting process and the notice sending process of steps S203 and S204 may be performed.

### (1-9) Application of Configurations for Reception of Downlink Control Information

The configurations for reception of downlink control information described in (1-1) through (1-8) of the present embodiment may be applicable when the terminal 20 is in at least one of idle mode (RRC IDLE), inactive mode (INACTIVE), and connected mode (CONNECTED). Furthermore, different configurations may be applied depending on the status.

The configurations for receiving downlink control information described in (1-1) to (1-8) of the present embodiment may be applied to the terminal 20 when the terminal 20 is in at least one of a primary cell (PCell), a primary secondary group cell (PSCell), and a secondary cell (SCell). Different configurations may be applied to different cells.

The above-described embodiment makes it possible to set configurations for reception and monitoring of downlink control information that are suitable for every terminal in a wireless communication system. Furthermore, by configuring downlink control information monitoring and reception in a customized manner, on a per terminal basis, each terminal's power consumption can be reduced even more.

### (Device Structures)

Next, example functional structures of the base station 10 and the terminal 20 having functions to implement the above-described processes and operations will be described. The base station 10 and the terminal 20 have functions to carry out the above-described embodiment. However, both the base station 10 and the terminal 20 may have only some of the functions of the embodiment.

### <Base Station 10>

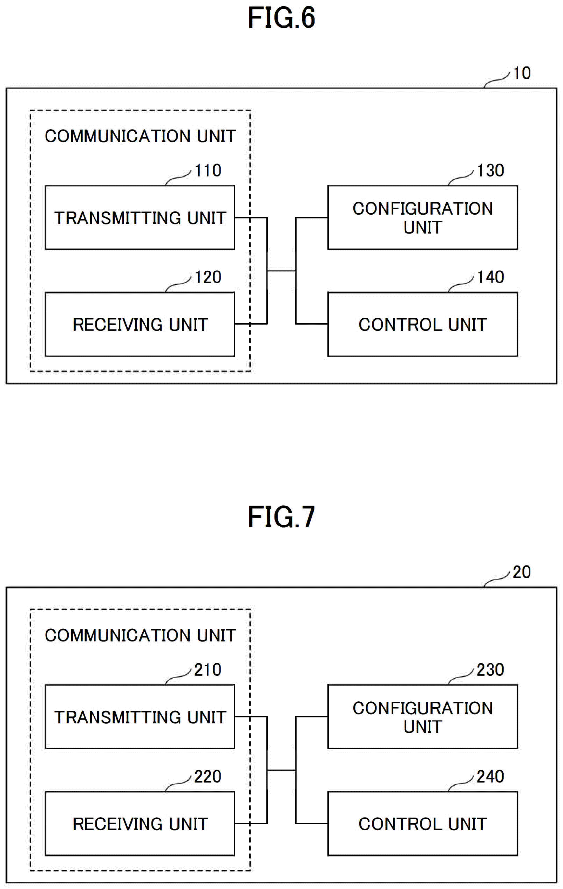

FIG. 6 is a diagram showing an example functional structure of a base station 10 according to an embodiment of the present invention. As shown in FIG. 6, the base station 10 has a transmitting unit 110, a receiving unit 120, a configuration unit 130, and a control unit 140. The functional structure shown in FIG. 6 is simply an example. As long as the operations according to the embodiment of the present invention can be implemented, any functional categories and any functional unit names may be used.

The transmitting unit 110 has, for example, a function to generate signals to be transmitted to the terminal 20 or other network nodes and transmit the signals via a wireless connection. The transmitting unit 110 also transmits inter-network node messages to other network nodes. The receiving unit 120 has, for example, a function to receive various signals transmitted from the terminal 20 and acquire, for example, higher layer information from the received signals. Also, the transmitting unit 110 has a function to transmit NR-PSS, NR-SSS, NR-PBCH, DL/UL control signals, etc., to the terminal 20. Also, the receiving unit 120 may receive inter-network node messages from other network nodes.

The configuration unit 130 stores configuration information that is set in advance, as well as various configuration information to be transmitted to the terminal 20. The content of the configuration information include, for example, information about the modulation method, coding method, channel bandwidth, waveform, subcarrier spacing, etc.

The control unit 140 executes control to implement the functions described hereinabove with the embodiment. Also, the control unit 140 executes control related to the modulation method, coding method, channel bandwidth, waveform, subcarrier spacing, etc., as has been described with the embodiment. The functional unit related to signal transmission in the control unit 140 may be included in the transmitting unit 110, and the functional unit related to signal reception in the control unit 140 may be included in the receiving unit 120.

### <Terminal 20>

FIG. 7 is a diagram showing an example functional structure of a terminal 20 according to an embodiment of the present invention. As shown in FIG. 7, the terminal 20 has a transmitting unit 210, a receiving unit 220, a configuration unit 230, and a control unit 240. The functional structure shown in FIG. 7 is simply an example. As long as the operations according to the embodiment of the present invention can be implemented, any functional categories and any functional unit names may be used.

The transmitting unit 210 creates transmission signals from transmission data and transmits them via a wireless connection. The receiving unit 220 may receive various signals via a wireless connection, and obtains higher layer signals from the physical layer signals received. The receiving unit 220 also has a function to receive NR-PSS, NR-SSS, NR-PBCH, DL/UL/SL control signals, etc., sent from the base station 10. Furthermore, for example, in D2D communication, the transmitting unit 210 transmits a physical sidelink control channel (PSCCH), a physical sidelink shared channel (PSSCH), a physical sidelink discovery channel (PSDCH), a physical sidelink broadcast channel (PSBCH), etc., to other terminals 20, and the receiving unit 220 may receive PSCCH, PSSCH, PSDCH, PSBCH, etc., from other terminals 20.

The configuration unit 230 stores various types of configuration information received from the base station 10 by the receiving unit 220. The configuration unit 230 also stores pre-configured configuration information. The content of the configuration information includes, for example, information about the modulation method, coding method, channel bandwidth, waveform, subcarrier spacing, etc.

The control unit 240 executes control to implement the functions described hereinabove with the embodiment. Also, the control unit 240 executes control related to the modulation method, coding method, channel bandwidth, waveform, subcarrier spacing, etc., as has been described with the embodiment. The functional unit related to signal transmission in the control unit 240 may be included in the transmitting unit 210, and the functional unit related to signal reception in the control unit 240 may be included in the receiving unit 220.

### (Hardware Structures)

The block diagrams (FIG. 6 and FIG. 7) used in the description of the above embodiment illustrate blocks of functional units. These functional blocks (components) may be implemented by any combination of hardware and/or software. In addition, the method of implementing each functional block is not particularly limited. That is, each functional block may be implemented by using a single device that may be physically or logically combined, or two or more devices that may be physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, assumption, deeming, broadcasting, notifying, communicating, forwarding, configuring, reconfiguring, allocating, mapping, and assigning. For example, a functional block (component) that performs a transmission function may be referred to as a "transmitting unit" or a "transmitter". In either case, as described above, the method of implementation is not particularly limited.

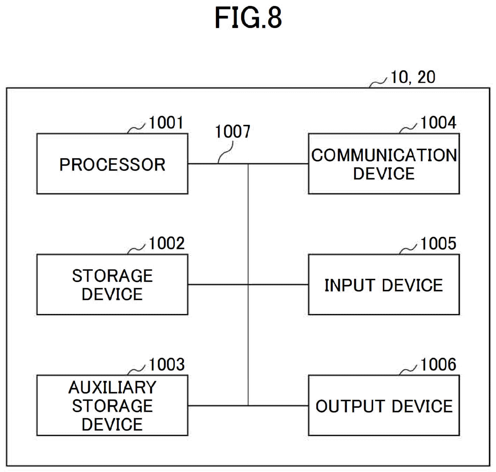

For example, the base station 10, the terminal 20, and so forth according to the embodiment of the present disclosure may function as a computer for processing the wireless communication method of the present disclosure. FIG. 8 is a diagram that illustrates an example hardware structure of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuit, apparatus, unit, and so forth. The hardware structure of the base station 10 and the terminal 20 may be configured to include one or more of the devices illustrated in the drawings, or may be configured without some of the devices.

The functions of the base station 10 and the terminal 20 may be realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operations described in the above embodiment may be used. For example, the control unit 140 of the base station 10 illustrated in FIG. 6 may be stored in the storage device 1002 and implemented by control programs that operate on the processor 1001. For example, the control unit 240 of the terminal 20 illustrated in FIG. 7 may be stored in the storage device 1002 and implemented by control programs that operate on the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 may be a computer-readable recording medium and composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 may be a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that may include at least one of a storage device 1002 and an auxiliary storage device 1003.

The communication device 1004 may be hardware (a transceiving device) for performing communication between computers via at least one of a wired network and a wireless network, and also referred to as a "network device", a "network controller", a "network card", a "communication module", or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 may be an input device (for example, a keyboard, a mouse, a microphone, a switch, a button, a sensor, etc.) that accepts external input. The output device 1006 may be an output device (for example, a display, a speaker, an LED lamp, etc.) that implements external output. The input device 1005 and the output device 1006 may have an integral structure (for example, a touch panel).

Each device, such as the processor 1001 and the storage device 1002, may be connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented by using at least one of these hardware components.

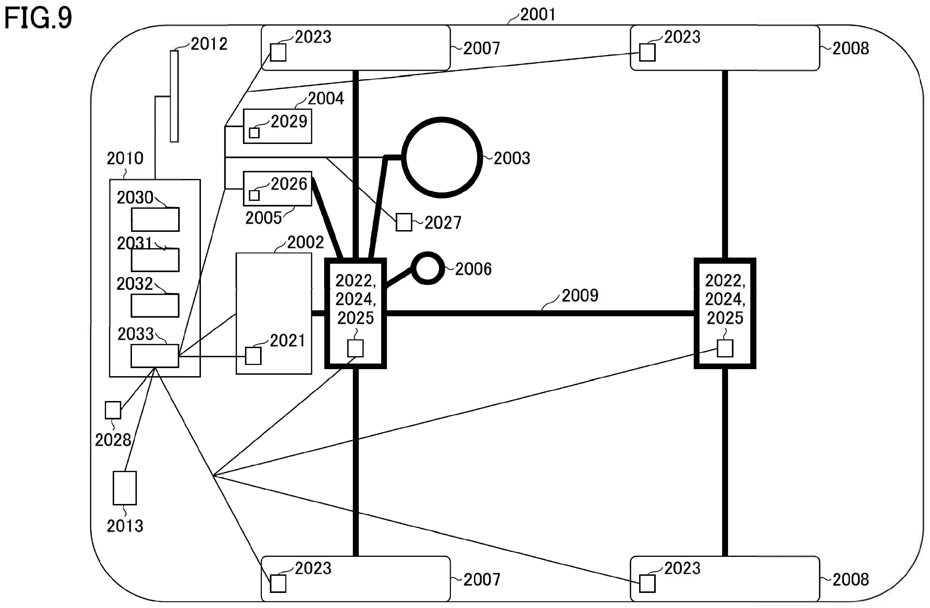

FIG. 9 shows an example structure of a vehicle 2001. As shown in FIG. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The embodiment and examples described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 may include at least a steering wheel and may be configured to steer at least one of the front wheel and the rear wheel, based on the operation of the steering wheel operated by the user.

The electronic control unit 2010 may include a microprocessor 2031, a memory (ROM, RAM) 2032, and a communication port (IO port) 2033. The electronic control unit 2010 may receive signals from the sensors 2021 to 2029 provided in the vehicle 2001. The electronic control unit 2010 may be referred to as an "electronic control unit" (ECU).

The signals from the sensors 2021 to 2029 may include a current signal from a current sensor 2021 that senses the current of the motor, a front or rear wheel rotation speed signal acquired by a rotation speed sensor 2022, a front or rear wheel air pressure signal acquired by an air pressure sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, a shift lever operation signal acquired by a shift lever sensor 2027, and a detection signal, acquired by an object detection sensor 2028, for detecting an obstacle, a vehicle, a pedestrian, and the like.

The information service unit 2012 may include various devices for providing various information such as driving information, traffic information, and entertainment information, including a car navigation system, an audio system, a speaker, a television, and a radio, and one or more ECUs that control these devices. The information service unit 2012 may provide various multimedia information and multimedia services to the occupants of the vehicle 2001 by using information obtained from external devices through the communication module 2013 or the like. The information service unit 2012 may include an input device (for example, a keyboard, a mouse, a microphone, a switch, a button, a sensor, a touch panel, etc.) that accepts external inputs, and may also include an output device (for example, a display, a speaker, an LED lamp, a touch panel, etc.) that executes external outputs.

A driver assistance system unit 2030 may include: various devices for providing functions of preventing accidents and reducing the driver's burden of driving, such as a millimeter wave radar, a light detection and ranging (LiDAR) system, a camera, a positioning locator (for example, GNSS), map information (for example, high definition (HD) map, autonomous vehicle (AV) map, etc.), a gyro system (for example, an inertial measurement unit (IMU), an inertial navigation system (INS), etc.), an artificial intelligence (AI) chip, and an AI processor; and one or more ECUs that control these devices. In addition, the driver assistance system unit 2030 may transmit and receive various information via the communication module 2013 to implement a driver assistance function or an autonomous driving function.

The communication module 2013 may communicate with the microprocessor 2031 and components of the vehicle 2001 via a communication port. For example, the communication module 2013 may transmit and receive data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM) 2032 in the electronic control unit 2010, and the sensors 2021 to 2029 provided in the vehicle 2001.

The communication module 2013 may be a communication device that can be controlled by the microprocessor 2031 of the electronic control unit 2010 and that may be capable of communicating with external devices. For example, various kinds of information may be transmitted to and received from external devices through wireless communication. The communication module 2013 may be internal or external to the electronic control unit 2010. The external devices may include, for example, a base station, a mobile station, or the like.

The communication module 2013 may transmit at least one of: signals input to the electronic control unit 2010 from the sensors 2021 to 2028; information obtained based on these signals; and information based on inputs from the outside (user) obtained via the information service unit 2012, to external devices via wireless communication. The electronic control unit 2010, the sensors 2021 to 2028, the information service unit 2012, and the like may be referred to as an "input unit" that accepts inputs. For example, PUSCH transmitted by the communication module 2013 may include information that is based on an input such as one described above.

The communication module 2013 may receive various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on PDSCH (or data/information decoded from PDSCH) received by the communication module 2013). In addition, the communication module 2013 may store the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Summary of Embodiment)

According to the above-described embodiment of the present invention, a terminal is provided. The terminal includes: a receiving unit configured to receive configuration information from a base station, the configuration information relating to reception of downlink control information and including configurations that vary depending on at least one of a terminal type, a terminal identifier, or a terminal capability; and a control unit configured to set, based on the configuration information, configurations that relate to the reception of the downlink control information and that correspond to the terminal. The receiving unit is configured to receive the downlink control information from the base station.

Incorporating the above feature, a wireless communication system allows for setting configurations that relate to monitoring and reception of downlink control information and that are suitable for each terminal in the wireless communication system. Furthermore, by thus configuring monitoring and reception of downlink control information in a customized manner, on a per terminal basis, it is possible to reduce each terminal's power consumption even more.

The configuration information may relate to the downlink control information and include at least one configuration among: whether or not reception is needed; time resources and frequency resources; a received intensity at the terminal; a radio network temporary identifier (RNTI); a number of control channel elements (CCEs); or an aggregation level (AL).

Incorporating the above feature, a wireless communication system allows for setting configurations that relate to monitoring and reception of downlink control information and that are suitable for each terminal in the wireless communication system.

The configuration information may include a plurality of sets of configurations that relate to the reception of the downlink control information. The control unit may be configured to select, from the plurality of sets of configurations, a set of configurations that corresponds to the terminal. The terminal may further include a transmitting unit configured to transmit, to the base station, a notice including the selected set of configurations.

Incorporating the above feature, a wireless communication system allows for setting configurations that relate to monitoring and reception of downlink control information and that are suitable for each terminal in the wireless communication system.

The configuration information may include a configuration for activating or deactivating part of a plurality of configurations that relate to the reception of the downlink control information.

Incorporating the above feature, a wireless communication system allows for setting configurations that relate to monitoring and reception of downlink control information and that are suitable for each terminal in the wireless communication system.

According to the above-described embodiment of the present invention, a base station includes: a transmitting unit configured to transmit configuration information to a terminal, the configuration information relating to reception of downlink control information and including a plurality of sets of configurations that vary depending on at least one of a terminal type, a terminal identifier, or a terminal capability; and a receiving unit configured to receive a notice from the terminal, the notice including a set of configurations selected by the terminal from the plurality of sets of configurations. The transmitting unit is configured to transmit the downlink control information to the terminal.

Incorporating the above feature, a wireless communication system allows for setting configurations that relate to monitoring and reception of downlink control information and that are suitable for each terminal in the wireless communication system. Furthermore, by thus configuring monitoring and reception of downlink control information in a customized manner, on a per terminal basis, it is possible to reduce each terminal's power consumption even more.

A communication method to be executed by a terminal, the method including: a step of receiving configuration information from a base station, the configuration information relating to reception of downlink control information and including configurations that vary depending on at least one of a terminal type, a terminal identifier, or a terminal capability; a step of setting, based on the configuration information, configurations that relate to the reception of the downlink control information and that correspond to the terminal; and a step of receiving the downlink control information from the base station.

Incorporating the above feature, a wireless communication system allows for setting configurations that relate to monitoring and reception of downlink control information and that are suitable for each terminal in the wireless communication system. Furthermore, by thus configuring monitoring and reception of downlink control information in a customized manner, on a per terminal basis, it is possible to reduce each terminal's power consumption even more.

### (Notes on Embodiment)

An example embodiment of the present invention has been described above, but the disclosed invention is not limited to the above embodiment, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of multiple functional units may be performed physically by one component, or an operation of one functional unit may be physically performed by multiple parts. In the processing procedures described in the embodiment, the order of the processes may be changed as long as there is no contradiction. For the sake of convenience of processing description, the base station 10 and the terminal 20 may be described using functional block diagrams, but such devices may be implemented by hardware, software, or a combination of these. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, indication of information is not limited to the embodiment or examples described in the present disclosure, and may be provided by using any other method. For example, the indication of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each embodiment and example described in the present disclosure may be applied to at least one of long-term evolution (LTE), LTE-advanced (LTE-A), SUPER 3G, IMT-Advanced, 4th generation mobile communication system (4G), 5th generation mobile communication system (5G), 6th generation mobile communication system (6G), x-th generation mobile communication system (xG) (where "x" is an integer, decimal, etc.), future radio access (FRA), new radio (NR), new radio access (NX), future generation radio access, W-CDMA (registered trademark), GSM (registered trademark), CDMA 2000, ultra-mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced, modified, created, and defined based on these standards. Furthermore, multiple systems (for example, a combination of at least one of LTE and LTE-A, with 5G) may be combined to be applied.

The order of the processing procedures, the order of the sequences, the order of the flowcharts, and the like of the embodiment and examples described in this specification may be changed, provided that there is no contradiction. For example, the method described in the present disclosure may present elements of various steps with an example order and does not have to be limited to the presented, specific order.

In this specification, a specific operation to be performed by the base station 10 may be performed by its upper node in some cases. In a network including one or more network nodes including the base station 10, various operations performed for communication with the terminal 20 can be obviously performed by at least one of the base station 10 and any network node (for example, an MME, an S-GW, and so forth, but these are by no means limiting) other than the base station 10. Cases have been shown above in which there is one network node other than the base station 10. The one network node may be a combination of multiple other network nodes (for example, MME and S-GW).

Information, a signal, or the like described in the present disclosure may be output from a higher layer to a lower layer (or from a lower layer to a higher layer). Information, a signal, or the like described in the present disclosure may be input and output via multiple network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software", "firmware", "middleware", a "microcode", a "hardware description language", or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of these wired technology and radio technology may be included in a definition of a transmission medium.

Information, signals, and the like described in the present disclosure may be expressed using any one of a variety of techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency", a "cell", a "frequency carrier", or the like.

The terms "system" and "network" used in the present disclosure may be interchangeable.

Furthermore, the information, parameters, and the like described in the present disclosure may be expressed by using absolute values, may be expressed by using relative values from predetermined values, or may be expressed by using any other corresponding information. For example, radio resources may be indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)", "radio base station", "base station device", "fixed station" "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to by a term such as a "macrocell", a "small cell", a "femtocell", and a "picocell".

The base station can accommodate one or more (for example, three) cells. In a case in which the base station accommodates multiple cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, when a base station transmits information to a terminal, this may be interpreted as meaning that the base station controls or sends a command to the terminal based on the information.

In the present disclosure, the terms "mobile station (MS)", "user terminal", "user equipment (UE)", "terminal", and the like can be used interchangeably.

The mobile station may be referred to, by a person ordinarily skilled in the art, as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other suitable terms.

At least one of the base station and the mobile station may be also referred to as a "transmission device", a "receiving device", a "communication device", or the like. At least one of the base station and the mobile station may be a device installed in a mobile body, a mobile body itself, or the like. The moving object may be a movable object with any moving speed, and naturally a case where the moving object is stopped is also included. Examples of the moving object may include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station may also include an apparatus which does not necessarily move during communication operation. For example, at least one of a base station and a mobile station may be an Internet of Things (IoT) device such as a sensor.

Furthermore, the base station in the present disclosure may be replaced by the user terminal. For example, various embodiments and examples of the present disclosure may be applied to a configuration in which communication between the base station and the user terminal is replaced by communication between multiple terminals 20 (such communication may be referred to as "device-to-device (D2D)" communication, "vehicle-to-everything (V2X)" communication, etc.). In this case, the terminals 20 may have and perform the functions that the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging", "calculating", "computing", "processing", "deriving", "investigating", "looking up (for example, searching in a table, a database, or another data structure)", "searching", "inquiring", or "ascertaining" as "determining" and/or "deciding". Furthermore, the "determination" and "decision" may include deeming "receiving (for example, receiving information)", "transmitting (for example, transmitting information)", "inputting", "outputting", or "accessing (for example, accessing data in a memory)" as "determining" and/or "deciding". Furthermore, the "determination" and "decision" may include deeming "resolving", "selecting", "choosing", "establishing", or "comparing" as "determining" and/or "deciding". Namely, the "determination" and "decision" may include deeming an operation as "determining" and/or "deciding". Furthermore, "determining" may be replaced with "assuming", "expecting", "considering", or the like.

The terms "connected", "coupled", or variations thereof may mean any direct or indirect connection or coupling between two or more elements and may include the presence of one or more intermediate elements between two elements which are "connected" or "coupled". The coupling or the connection between the elements may be physical, logical, or a combination thereof. For example, "connection" may be replaced with "access". In the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as nonlimiting and non-exhaustive examples.

A reference signal may be abbreviated as "RS" and may be referred to as a "pilot", depending on the standard that is applied.

The phrase "based on" used in the present disclosure does not only mean "based only on", unless otherwise stated. In other words, the phrase "based on" may mean both "based only on" and "based at least on".

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

Furthermore, "means" in the structure of each of the above devices may be replaced with "unit", "part", "circuit", "device", or the like.

In the case where the terms "include", "including" and variations thereof are used in the present disclosure, these terms are intended to be customized in the same way as the term "comprising". Further, the term "or" used in the present specification is not intended to be an "exclusive or".

A radio frame may include one or more frames in the time domain. In the time domain, each of one or more frames may be referred to as a "subframe". The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot". A mini slot may include fewer symbols than a slot. PDSCH (or PUSCH) that is transmitted in a unit of time greater than a mini slot may be referred to as "PDSCH (or PUSCH) mapping type A". PDSCH (or PUSCH) that is transmitted using a mini slot may be referred to as "PDSCH (or PUSCH) mapping type B".

Any one of a radio frame, a subframe, a slot, a mini slot, and a symbol may indicate a time unit for transmitting a signal. As a radio frame, a subframe, a slot, a mini slot, and a symbol, different names corresponding to them may be used.

For example, one subframe may be referred to as a "transmission time interval (TTI)", or a plurality of consecutive subframes may be referred to as a "TTI", or one slot or one mini slot may be referred to as a "TTI". In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot", a "mini slot", or the like, instead of a "subframe".

Here, for example, the TTI may refer to a minimum time unit of scheduling in wireless communication. For example, in an LTE system, the base station may perform scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot may be referred to as a "TTI", one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI", a "long TTI", a "common subframe", a "normal subframe", a "long subframe", a "slot", or the like. A TTI shorter than a common TTI may be referred to as a "reduced TTI", a "short TTI", a "partial TTI" (a partial or fractional TTI), a "reduced subframe", a "short subframe", a "mini slot", a "sub slot", a "slot", or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) may be a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Furthermore, one or more RBs may be referred to as a "physical resource block (PRB)", a "subcarrier group (SCG)", a "resource element group (REG)", a "PRB pair", an "RB pair", or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

BWPs may include BWPs for UL (UL BWPs) and BWPs for DL (DL BWPs). In the terminal 20, one or more BWPs may be configured in one carrier.

At least one of configured BWPs may be active, and UE need not assume that predetermined signals/channels are transmitted and received outside an active BWP. Furthermore, a "cell", a "carrier", or the like in the present disclosure may be replaced with a "BWP".

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a", "an", or "the" in English is added by a translation, the present disclosure may include a case in which a noun following the article is the plural.

In the present disclosure, "A and B are different" may mean "A and B are different from each other". However, this may also mean "A and B are different from C". Terms such as "separated" or "combined" may be interpreted as well as "different".

Each embodiment or example described in the present disclosure may be used alone, in combination, or may be switched in accordance with the implementation. Furthermore, indication of predetermined information (for example, indication of "being X") is not limited to indication performed explicitly, but may be performed implicitly (for example, not notifying the predetermined information).

Although the present disclosure has been described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### DESCRIPTION OF REFERENCE CODES

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 30: power-transmitting device
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driver assistance system unit
- 2031: microprocessor
- 2032: memory (ROM, RAM)
- 2033: communication port (IO port)

## Claims

1. A terminal comprising:
a receiving unit configured to receive configuration information from a base station, the configuration information relating to reception of downlink control information and including configurations that vary depending on at least one of a terminal type, a terminal identifier, or a terminal capability; and
a control unit configured to set, based on the configuration information, configurations that relate to the reception of the downlink control information and that correspond to the terminal,
wherein the receiving unit is configured to receive the downlink control information from the base station.

2. The terminal according to claim 1, wherein the configuration information relates to the downlink control information and includes at least one configuration among:
whether or not reception is needed;
time resources and frequency resources;
a received intensity at the terminal;
a radio network temporary identifier (RNTI);
a number of control channel elements (CCEs); or
an aggregation level (AL).

3. The terminal according to claim 1,
wherein the configuration information includes a plurality of sets of configurations that relate to the reception of the downlink control information,
wherein the control unit is configured to select, from the plurality of sets of configurations, a set of configurations that corresponds to the terminal, and
wherein the terminal further includes a transmitting unit configured to transmit, to the base station, a notice including the selected set of configurations.

4. The terminal according to claim 1, wherein the configuration information includes a configuration for activating or deactivating part of a plurality of configurations that relate to the reception of the downlink control information.

5. A base station comprising:
a transmitting unit configured to transmit configuration information to a terminal, the configuration information relating to reception of downlink control information and including a plurality of sets of configurations that vary depending on at least one of a terminal type, a terminal identifier, or a terminal capability; and
a receiving unit configured to receive a notice from the terminal, the notice including a set of configurations selected by the terminal from the plurality of sets of configurations,
wherein the transmitting unit is configured to transmit the downlink control information to the terminal.

6. A communication method to be executed by a terminal, the method comprising:
a step of receiving configuration information from a base station, the configuration information relating to reception of downlink control information and including configurations that vary depending on at least one of a terminal type, a terminal identifier, or a terminal capability;
a step of setting, based on the configuration information, configurations that relate to the reception of the downlink control information and that correspond to the terminal; and
a step of receiving the downlink control information from the base station.
